# EUROPÄISCHE PATENTSCHRIFT

(11) **EP 2 703 789 B1**
(45) Veröffentlichungstag und Bekanntmachung des Hinweises auf die Patenterteilung: **18.02.2015**
(21) Anmeldenummer: 12182902.2
(22) Anmeldetag: 04.09.2012
(51) Int. Cl.: G01J 3/02, G01J 3/50

(54) **Handfarbmessgerät**
Hand-held colour measurement device
Colorimètre manuel

(43) Veröffentlichungstag der Anmeldung: 05.03.2014
(73) Patentinhaber: X-Rite Switzerland GmbH, 8105 Regensdorf (CH)
(72) Erfinder: Danhamer, Bernd, 8166 Niederweningen (CH); Feri, Lido, 5436 Würenlos (CH); Kessler, Marco, 5607 Hägglingen/AG (CH)
(74) Vertreter: Schwabe - Sandmair - Marx

(56) Entgegenhaltungen:
- EP-A2- 1 655 589
- DE-A1- 10 018 982
- DE-A1- 19 633 557
- DE-A1-102004 034 167
- JP-A- 5 256 772

## Beschreibung

Die Erfindung betrifft ein Handfarbmessgerät gemäss dem Oberbegriff des unabhängigen Anspruchs 1.

Handfarbmessgeräte der zur Rede stehenden Art können unabhängig von der zugrundeliegenden Messtechnologie als autonome Geräte oder als Messperipherie zum Einsatz in Verbindung mit einem steuernden und Messdaten auswertenden Rechner ausgebildet sein. Autonome Farbmessgeräte enthalten alle für den Messbetrieb erforderlichen Bedienungs- und Anzeigeorgane sowie eine eigene Stromversorgung und sind darüber hinaus vielfach auch noch mit einer Schnittstelle zur Kommunikation mit einem Rechner ausgestattet, wobei mit dem Rechner sowohl Messdaten als auch Steuerungsdaten ausgetauscht werden können. Als Messperipherie ausgelegte Farbmessgeräte haben in der Regel keine eigenen Bedienungs- und Anzeigeorgane und werden - wie jedes andere Rechnerperipheriegerät - vom übergeordneten Rechner gesteuert. Zur Kommunikation mit einem Rechner sind modernere Farbmessgeräte oft z.B. mit einer sog. USB-Schnittstelle (Universal Serial Bus) ausgerüstet, über welche in vielen Fällen gleichzeitig auch die Stromversorgung (vom angeschlossenen Rechner aus) erfolgen kann.

Metallicfarben und Lacke mit Effektpigmenten kommen heutzutage immer mehr zum Einsatz nicht nur in der Automobilindustrie. Solche Farben zeigen eine starke Winkelabhängigkeit. Lacke mit Aluminiumflakes zeigen zum Beispiel einen starken Helligkeitsflop. Lacke mit Interferenz-Effekt-Pigmente zeigen dazu auch Farbunterschiede mit geänderter Beobachtungs- oder Beleuchtungsrichtung. Zum Messen solcher Lacke haben sich Mehrwinkelmessgeräte etabliert. Glanzmessung ist ein verwandtes Thema, bei dem das Messresultat ebenfalls winkelsensitiv ist.

Messgeräte, die solche Eigenschaften erfassen können, müssen dazu ausgebildet sein, das Messobjekt unter einer oder mehreren verschiedenen, genau definierten Beleuchtungsrichtungen (bezogen auf die Normale auf das Messobjekt im Messfleck) zu beleuchten und das vom Messobjekt zurückgestrahlte Licht aus zumindest einer genau definierten Beobachtungsrichtung (ebenfalls bezogen auf die Normale auf das Messobjekt im Messfleck) aufzupicken. Beobachtungsrichtung und Beleuchtungsrichtung können ausgetauscht werden. Gebräuchlich ist in der Praxis eine Messanordnung mit mindestens einer Beleuchtungsrichtung und mehreren Beobachtungsrichtungen.

Ein typisches Einsatzgebiet für derartige Farbmessgeräte ist die Automobilindustrie, wo es darum geht, Lacke auf Karosserieteilen unter mehreren Winkeln farblich und eventuell in zusätzlichen Appearance-Aspekten auszumessen.

Eine grosse Schwierigkeit bei diesem Einsatzfall besteht darin, dass oft an gekrümmten Oberflächen gemessen werden muss. Wenn das Messgerät nicht genau und reproduzierbar auf der gekrümmten Messoberfläche aufgesetzt wird, ergeben sich Abweichungen zu den üblicherweise sehr eng tolerierten Beleuchtungs- und Beobachtungsrichtungen, was wiederum zu Messwertverfälschungen führt.

Es sind schon Handfarbmessgeräte bekannt, die mit speziellen Auflagevorrichtungen zum Aufsetzen der Geräte auf gekrümmten Messobjekten ausgestattet sind. Ein bekanntes Handfarbmessgerät besitzt eine Auflagevorrichtung in Form eines die Messöffnung umgebenden Ringkragens. Diese Auflagevorrichtung ist jedoch nur für regelmässig gekrümmte Oberflächen geeignet. Andere Handfarbmessgeräte sind mit Sensoren ausgestattet, die dem Benutzer anzeigen, wie er das Handfarbmessgerät positionieren muss. Diese Auflagevorrichtung ist einerseits verhältnismässig aufwändig und erfordert anderseits ein aktives Zutun des Benutzers.

Durch die vorliegende Erfindung soll nun ein Handfarbmessgerät der gattungsgemässen Art dahingehend verbessert werden, dass es mit einfachsten Mitteln sicher und reproduzierbar auch auf gekrümmte Messobjekte aufgesetzt werden kann, so dass die vorgegebenen Beleuchtungs- und Beobachtungsrichtungen genau eingehalten und dadurch Messwertverfälschungen vermieden werden.

Diese der Erfindung zugrundeliegende Aufgabe wird durch das durch die Merkmale des unabhängigen Anspruchs 1 gekennzeichnete erfindungsgemässe Handfarbmessgerät gelöst. Vorteilhafte Ausgestaltungen und Weiterbildungen des erfindungsgemässen Handfarbmessgeräts sind Gegenstand der abhängigen Ansprüche.

Das Wesen der Erfindung besteht in Folgendem: Ein Handfarbmessgerät weist ein eine Messanordnung und eine elektronische Steuerung aufnehmendes Gehäuse mit einem Gehäuseboden und einer Messöffnung auf, durch welche hindurch die Beleuchtung eines Messflecks auf einer Oberfläche eines Messobjekts und das Aufpicken des vom Messfleck zurückgestrahlten Messlichts erfolgt. Die Messanordnung umfasst eine Beleuchtungsanordnung zur Beaufschlagung des Messflecks mit Beleuchtungslicht in mindestens einer Beleuchtungsrichtung und eine Aufpickanordnung zur Erfassung des Messlichts in mindestens einer Beobachtungsrichtung. Die mindestens eine Beleuchtungsrichtung und die mindestens eine Beobachtungsrichtung liegen in einer gemeinsamen Beleuchtungs-Beobachtungs-Ebene. Das Gehäuse weist an seinem Gehäuseboden eine Auflagevorrichtung zum Positionieren des Geräts auf der auszumessenden Oberfläche auf. Die Auflagevorrichtung ist als Dreipunktauflage mit drei im Wesentlichen stiftförmigen Stützorganen mit je einer Auflagefläche ausgebildet, wobei die Auflageflächen eines ersten und eines zweiten Stützorgans in einer Basislinie liegen, welche in der Beleuchtungs-Beobachtungs-Ebene liegt, wobei die Auflagefläche, des dritten Stützorganes in einem Abstand zur Beleuchtungs-Beobachtungs-Ebene angeordnet ist und wobei die Auflageflächen der Stützorgane im Wesentlichen in einer zur Beleuchtungs-Beobachtungs-Ebene senkrechten Basisebene liegen.

Dabei liegt eine Projektion des auf die Basisebene bezogenen Schwerpunkts des Handfarbmessgeräts in Richtung senkrecht auf die Basisebene zwischen den Auflageflächen der Stützorgane. Weiter liegt die Projektion des Schwerpunkts innerhalb eines durch die drei Auflageflächen der drei Stützorgane definierten Dreiecks, wodurch ein stabiler Stand des Handfarbmessgeräts erreicht ist.

Durch die Ausbildung der Auflagevorrichtung als Dreipunktauflage wird eine sichere Positionierung des Messgeräts sowohl auf ebenen als auch auch gekrümmten Oberflächen von Messobjekten erreicht.

Das Handfarbmessgerät reagiert in der Beleuchtungs-Beobachtungs-Ebene sehr empfindlich auf Fehlpositionierung mit Winkelfehlern, quer dazu aber deutlich weniger. Durch die erfindungsgemässe Anordnung von zwei stiftförmigen Stützorganen in der genannten Basislinie in der Beleuchtungs-Beobachtungs-Ebene wird gewährleistet, dass die Beleuchtungs- und Beobachtungsrichtungen relativ zum Messfleck bzw. zur Normalen auf den Messfleck zumindest in der Beleuchtungs-Beobachtungsebene weitestgehend unabhängig von der Oberflächenkrümmung des Messobjekts bleiben. Auf diese Weise werden durch die Oberflächenkrümmung des Messobjekts bedingte Messwertverfälschungen weitestgehend vermieden. Durch die erfindungsgemässe spezifische Anordnung der Stützorgane kommen eventuelle Winkelfehler alle in die unempfindliche Richtung quer zur Beleuchtungs-Beobachtungs-Ebene zu liegen, in der kritischen Beleuchtungs-Beobachtungs-Ebene entstehen praktisch keine Winkelfehler.

Gemäss einer besonders vorteilhaften Ausführungsform sind das erste und das zweite Stützorgan zu beiden Seiten der Messöffnung und im Wesentlichen symmetrisch zu dieser angeordnet. Dies trägt weiter zur Vermeidung von Messwertverfälschungen bei.

Vorzugsweise sind die Auflageflächen der Stützorgane jeweils kleiner 20 mm², vorzugsweise kleiner 10 mm², insbesondere kleiner 5 mm²

Gemäss der Erfindung ist die Auflagevorrichtung als Dreipunktauflage mit drei im Wesentlichen stiftförmigen Stützorganen ausgebildet. Dies verleiht eine optimale Standfestigkeit des Handfarbmessgeräts.

Gemäss der Erfindung liegt eine Projektion des auf die Basisebene bezogenen Schwerpunkts des Geräts in Richtung senkrecht auf die Basisebene zwischen den Auflageflächen der Stützorgane. Durch diese Anordnung des Geräteschwerpunkts wird ein stabiler Stand des Messgeräts erreicht und die Gefahr, dass das Gerät kippt, verringert.

Vorteilhafterweise sind die stiftförmigen Stützorgane mit Sensoren, insbesondere Drucksensoren bzw. Kraftsensoren ausgestattet, welche mit der Steuerung derart zusammenarbeiten, dass überwacht und signalisiert wird, ob alle Stützorgane korrekt auf der Oberfläche des Messobjekts aufsitzen. Dadurch wird verhindert, dass bei unabsichtlichem Verkippen des Messgerätes Messfehler entstehen können.

Im Folgenden wird die Erfindung anhand der Zeichnung näher erläutert. Es zeigen:
- Fig. 1: eine Schrägansicht eines Ausführungsbeispiels des erfindungsgemässen Handfarbmessgeräts,
- Fig. 2: einen Vertikalschnitt durch das Handfarbmessgerät der Fig. 1,
- Fig. 3: eine Schrägansicht der Messanordnung des Handfarbmessgeräts,
- Fig. 4: einen Vertikalschnitt durch die Messanordnung der Fig. 3,
- Fig. 5: eine Skizze zur Verdeutlichung der gegenseitigen Lagen von Messanordnung und Stützorganen des Handfarbmessgeräts,
- Fig. 6: ein Blockschema der optischen und elektronischen Komponenten des Handfarbmessgeräts,
- Fig. 7: eine Ausbildungsvariante der Stützorgane des erfindungsgemässen Handfarbmessgeräts und
- Fig. 8-11: vier Skizzen zur Illustration des praktischen Einsatzes des Handfarbmessgeräts.

Für die nachfolgende Figurenbeschreibung gilt folgende Festlegung: Sind in einer Figur einzelne Bezugszeichen nicht eingetragen, so wird diesbezüglich auf die übrigen Figuren und die dazu gehörigen Beschreibungsteile verwiesen. Unter den verkürzten Begriffen "Farbmessgerät" und "Messgerät" wird immer ein Handfarbmessgerät verstanden. Unter "Messanordnung" wird die Gesamtheit derjenigen Komponenten des Handfarbmessgeräts verstanden, welche zur Beleuchtung eines Messflecks auf der Oberfläche eines Messobjekts und zur Erfassung des von diesem Messfleck zurückgestrahlten Lichts und zur Umwandlung desselben in korrespondierende elektrische Signale dienen.

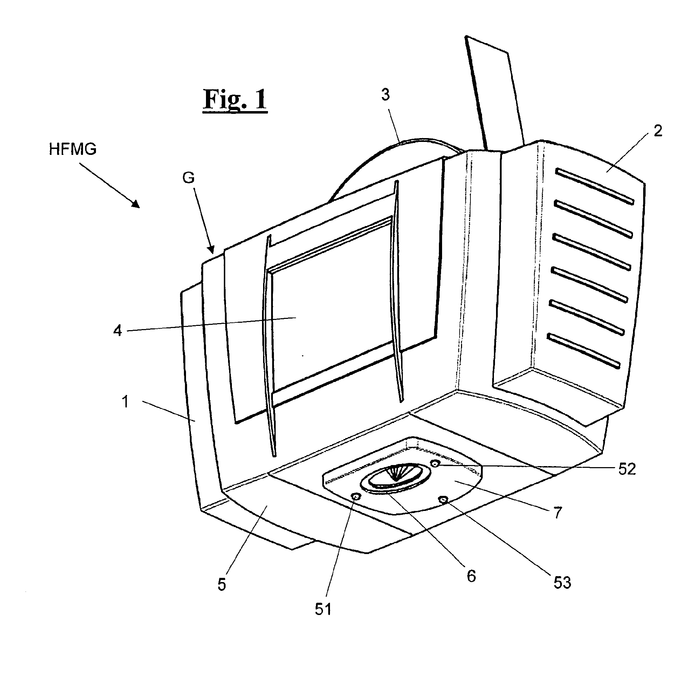

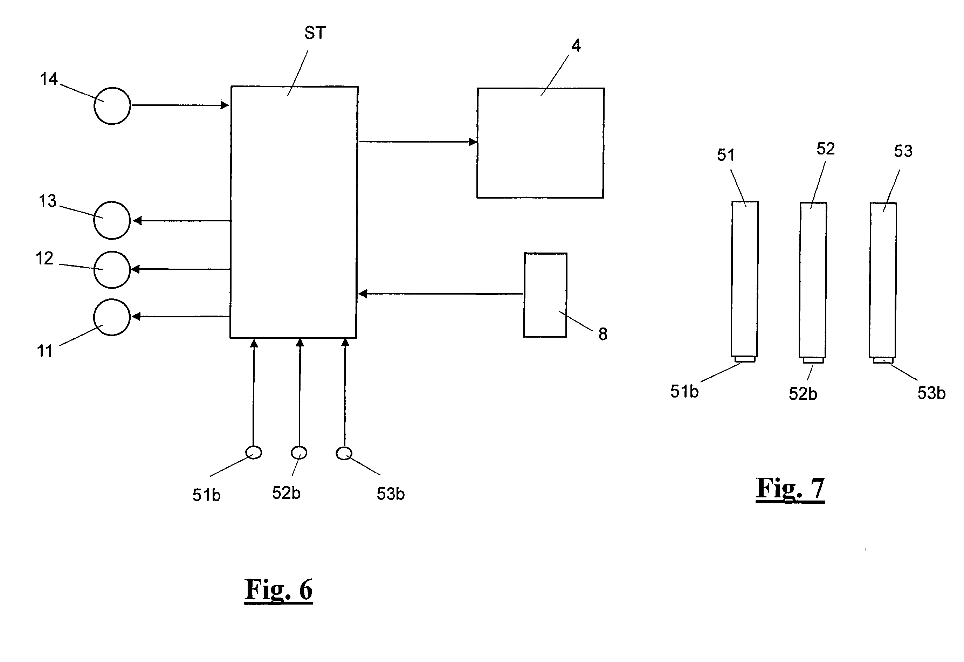

Das in Fig. 1 dargestellte Handfarbmessgerät ist als Ganzes mit HFMG bezeichnet. Es umfasst ein Gehäuse G, das eine Messanordnung MA und eine diese steuernde elektronische Steueranordnung ST aufnimmt (Fig. 6). Am Gehäuse G sind seitlich zwei Griffteile 1 und 2 ausgebildet. An der Oberseite des Gehäuses G ist eine Tragschlaufe 3 angeordnet. An der Vorderseite des Gehäuses G ist eine Anzeigeanordnung 4 vorgesehen. Ferner sind an der Oberseite des Gehäuses G in Fig. 6 schematisch dargestellte Bedienungsorgane 8 angeordnet.

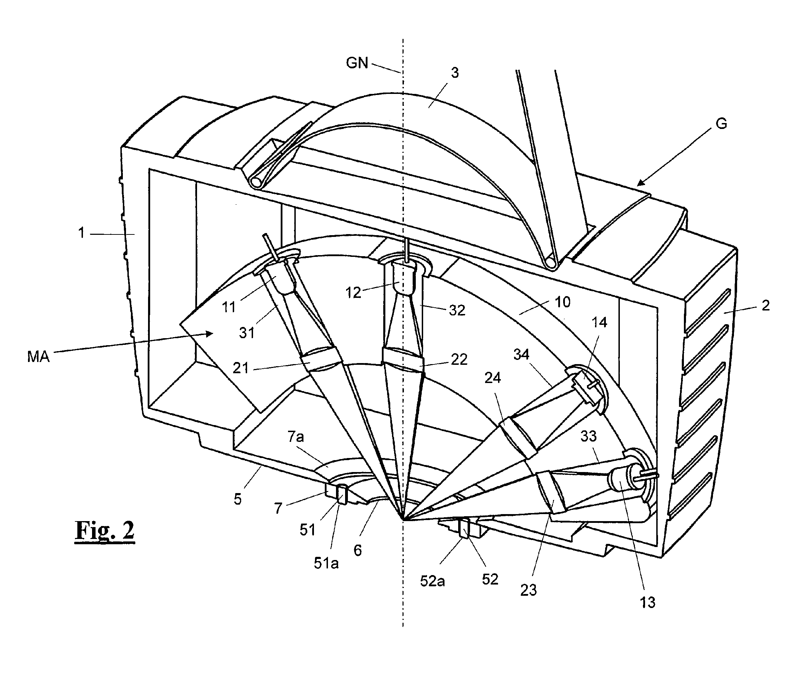

An der Unterseite weist das Gehäuse G einen Gehäuseboden 5 auf, der durch eine mit einer Messöffnung 6 versehene Basisplatte 7 verstärkt ist. Der Gehäuseboden 5 weist im Bereich der Messöffnung 6 eine Durchbrechung 7a (Fig. 2) auf, so dass Licht aus dem Gehäuseinneren durch die Durchbrechung 7a und die Messöffnung 6 austreten und umgekehrt Licht von aussen durch die Messöffnung 6 und die Durchbrechung 7a in das Gehäuseinnere eintreten kann.

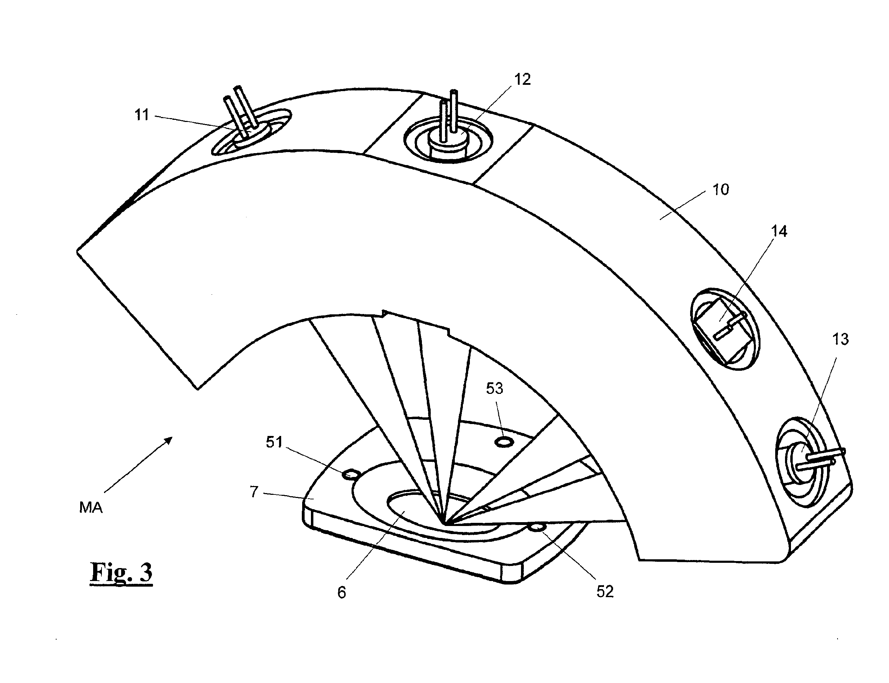

Die Ausbildung der Messanordnung MA geht aus den Figuren 2-4 hervor. Sie umfasst einen ortfest im Gehäuse G befestigten Bogenkörper 10, in dem alle optischen bzw. photoelektrischen Komponenten der Messanordnung MA in durchgehenden Kammern angeordnet sind. Im gezeigten Ausführungsbeispiel bestehen diese Komponenten aus drei Lichtquellen 11, 12 und 13, z.B. in Form von LEDs, und einem Lichtwandler in Form einer farbtauglichen Kamera 14 mit jeweils zugeordneten Linsensystemen 21, 22, 23 und 24. Entsprechend weist der Bogenkörper 10 vier Kammern 31-34 auf. Die Lichtquellen 11, 12 und 13 bilden zusammen mit den ihnen zugeordneten Linsensystemen 21, 22 und 23 eine Beleuchtungsanordnung für die Beleuchtung eines Messflecks MF in drei Beleuchtungsrichtungen. Entsprechend bildet der Lichtwandler 14 zusammen mit dem ihm zugeordneten Linsensystem 24 eine Aufpickanordnung für vom Messfleck MF in einer Beobachtungsrichtung zurückgestrahltes Licht.

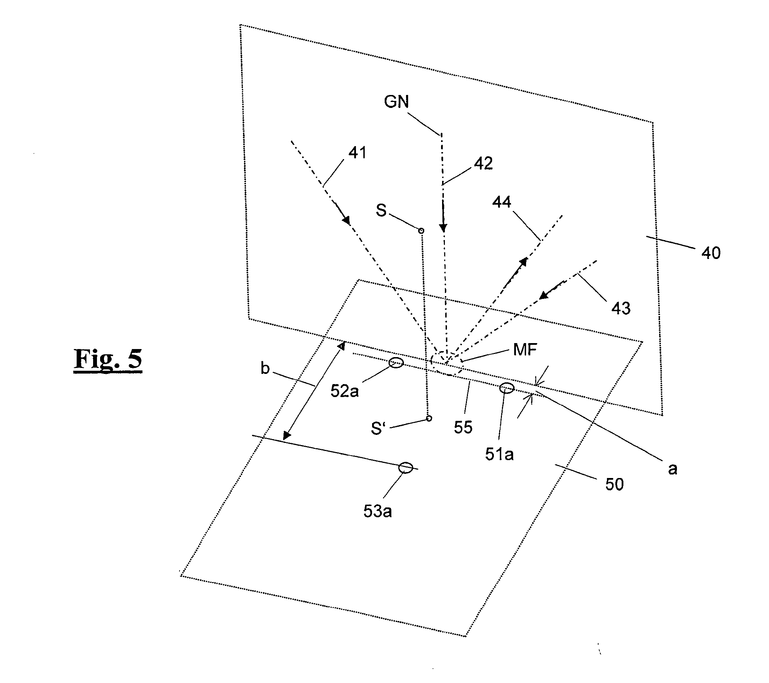

Die optischen Achsen der von den Lichtquellen 11, 12 und 13 ausgehenden und zum Lichtwandler 14 führenden Strahlengänge sind mit 41, 42, 43 und 44 bezeichnet. Die optischen Achsen 41, 42 und 43 definieren je eine nominelle Beleuchtungsrichtung, die optische Achse 44 definiert eine nominelle Beobachtungsrichtung. Die gesamte Messanordnung MA ist so getroffen, dass sich die optischen Achsen 41, 42, 43 und 44 bzw. die Beleuchtungsrichtungen und die Beobachtungsrichtung in einer gemeinsamen Ebene befinden, die im Folgenden als Beleuchtungs-Beobachtungs-Ebene 40 bezeichnet ist (Fig. 5) und senkrecht auf die Basisplatte 7 bzw. die darin befindliche Messöffnung 6 steht. Im gezeigten Ausführungsbeispiel sind die Beleuchtungs- und Aufpickstrahlengänge geradlinig ausgebildet. Es ist jedoch auch möglich, z.B. aus Platzgründen, einen oder mehrere der Strahlengänge abzuknicken, also z.B. mittels Spiegel umzulenken. Wesentlich ist lediglich, dass die optischen Achsen der Strahlengangabschnitte, welche unmittelbar zum Messfleck hin bzw. von diesem weg führen, in einer gemeinsamen Beleuchtungs-Beobachtungsebene liegen.

Die Lichtquellen 11, 12 und 13 werden von der rechnerbasierten Steueranordnung ST gesteuert (Fig. 6). Letztere steuert auch den Lichtwandler bzw. die Kamera 14 an und verarbeitet dessen Messsignale. Die Steueranordnung ST zeigt Messergebnisse auf der Anzeigeanordnung 4 an und nimmt Bedienungsbefehle von den Bedienungsorganen 8 entgegen.

Die Messanordnung MA kann bezüglich Beleuchtungs- und Beobachtungseinrichtungen auch umgekehrt ausgebildet sein. Das heisst im konkreten Fall, dass die Beleuchtung des Messobjekts nur unter einer definierten Beleuchtungsrichtung und dafür das Aufpicken des zurückgestrahlten Messlichts unter drei verschiedenen Beobachtungsrichtungen erfolgen würden. Selbstverständlich sind auch beliebige Kombinationen von einer oder mehreren Beleuchtungsrichtungen und einer oder mehreren Beobachtungsrichtungen möglich.

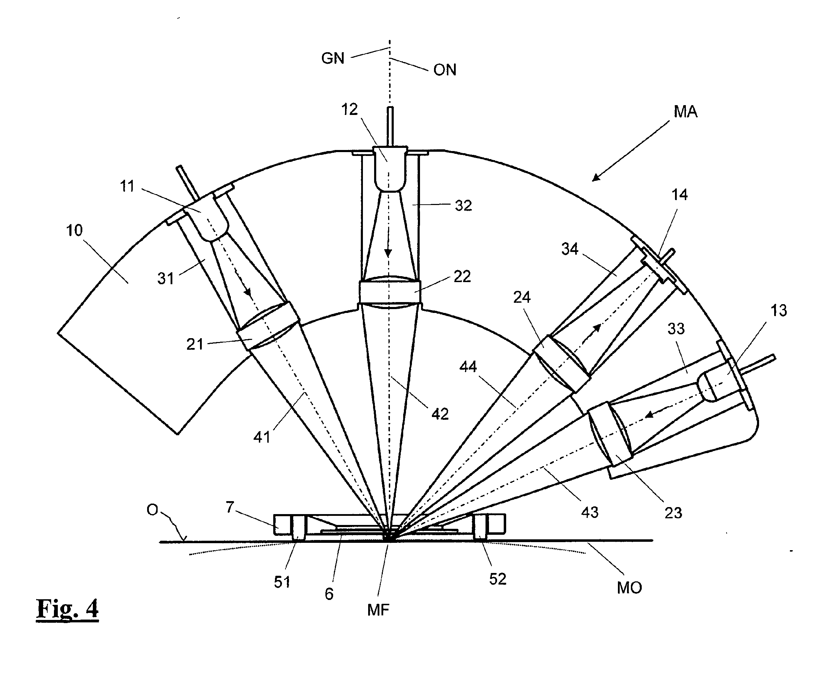

In Fig. 2 ist noch eine Gerätenormale GN eingetragen. Es handelt sich dabei um eine (gedachte) gerade Linie, die durch den Mittelpunkt der Messöffnung 6 bzw. den Schnittpunkt der optischen Achsen 41,42,43 und 44 verläuft und senkrecht auf die Ebene der Messöffnung 6 bzw. der diese enthaltenden Basisplatte 7 steht. Bei einem Messobjekt O mit ebener Oberfläche MO fällt die Gerätenormale GN mit einer durch den Mittelpunkt des Messflecks MF und senkrecht auf die Oberfläche O stehenden (gedachten) Oberflächennormalen ON (Fig. 4) zusammen.

Soweit entspricht das beschriebene Farbmessgerät im Grundsatz herkömmlichen Farbmessgeräten dieser Art, so dass der Fachmann diesbezüglich keiner weiteren Erläuterung bedarf.

Die vorliegende Erfindung befasst sich nicht mit der eigentlichen Messtechnologie und der Auswertung der Messergebnisse, sondern mit der Problematik der Positionierung des Messgeräts auf gekrümmten Oberflächen. Im Folgenden wird darauf näher eingegangen.

Gemäss einem ersten wichtigen Aspekt der Erfindung ist das Messgerät an seinem Gehäuseboden 5 mit einer als Mehrpunktauflage ausgebildeten Auflagevorrichtung ausgestattet. Konkret besteht die Auflagevorrichtung im gezeigten Ausführungsbeispiel aus drei stiftförmigen Stützorganen 51, 52 und 53, die in der Basisplatte 7 befestigt sind und senkrecht zu dieser aus ihr herausragen. Die drei stiftförmigen Stützorgane 51, 52, und 53 weisen je eine Auflagefläche 51a, 52a und 53 a auf (Figuren 2, 5 und 8). Die Längen der aus der Basisplatte 7 herausragenden Abschnitte der drei Stützorgane 51, 52, und 53 sind alle gleich und betragen einige wenige mm. Die Auflageflächen 51a, 52a und 53a der drei Stützorgane 51, 52, und 53 liegen in einer gemeinsamen Ebene, die parallel zur Basisplatte 7 bzw. der in dieser befindlichen Messöffnung 6 und senkrecht zur Beleuchtungs-Beobachtungs-Ebene 40 verläuft und im Folgenden als Basisebene 50 bezeichnet ist (Fig. 5). Die Grössen bzw. Flächen der Auflageflächen 51a, 52a und 53a der drei Stützorgane 51, 52, und 53 ist kleiner 20 mm², vorzugsweise kleiner 10 mm², insbesondere kleiner 5 mm².

Gemäss einem weiteren wichtigen Gedanken der Erfindung sind zwei stiftförmige Stützorgane 51 und 52 so angeordnet, dass die Mittelpunkte ihrer Auflageflächen 51 a und 52a auf einer Basislinie 55 liegen, welche in der Basisebene 50 liegt und parallel in geringem Abstand a zur Beleuchtungs-Beobachtungs-Ebene 40 verläuft (Fig. 5). Das dritte Stützorgan 53 bzw. dessen Auflagefläche 53a befindet sich in einem gegenüber dem Abstand a des ersten bzw. des zweiten Stützorgans grösseren Abstand b von der Beleuchtungs-Beobachtungs-Ebene 40. Der Abstand a der Basislinie 55 von der Beleuchtungs-Beobachtungs-Ebene ist erfindungsgemäß gleich 0, d.h. die Basislinie 55 fällt mit der Beleuchtungs-Beobachtungs-Ebene 40 zusammen. Die beiden auf der Basislinie 55 befindlichen Stützorgane 51 und 52 sind vorzugsweise symmetrisch zu beiden Seiten der Messöffnung 6 bzw. des Messflecks MF angeordnet, ihr gegenseitiger Abstand beträgt beispielsweise etwa 10-40 mm. Der Abstand b des dritten Stützorgans 53 von der Beleuchtungs-Beobachtungs-Ebene 40 beträgt beispielsweise etwa 15-40 mm.

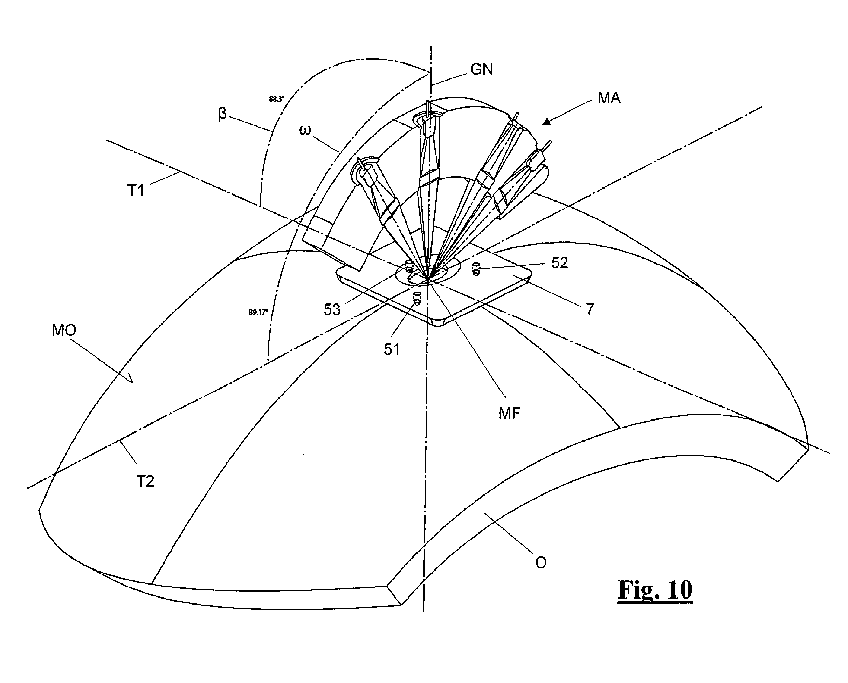

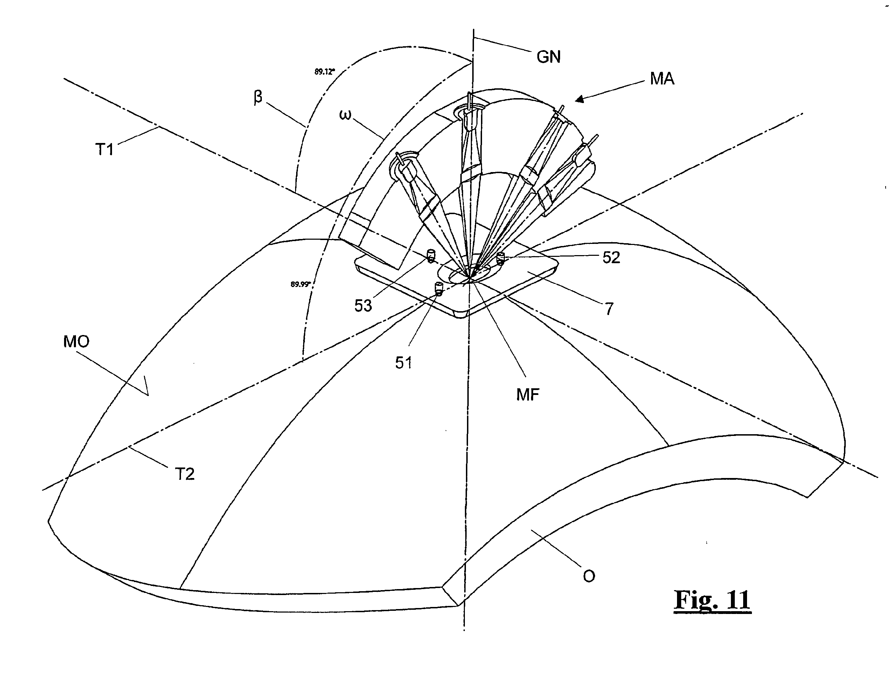

In Fig. 5 befinden sich die drei Stützorgane 51, 52 und 53 alle auf der selben Seite der Beleuchtungs-Beobachtungs-Ebene 40. Selbstverständlich können das erste und das zweite Stützorgan 51 und 52 einerseits und das dritte Stützorgan 53 (und eventuelle weitere Stützorgane) anderseits auch auf verschiedenen Seiten der Beleuchtungs-Beobachtungs-Ebene 40 liegen, so wie dies bei den Ausführungsbeispielen der Figuren 10 und 11 dargestellt ist. Erfindungsgemäß fällt jedoch die Basislinie mit der Beleuchtungs-Beobachtungs-Ebene zusammen. Gemäss einem weiteren wichtigen Erfindungsgedanken ist das Messgerät bezüglich Anordnung und Gewichtsverteilung seiner Komponenten so konzipiert, dass sein auf die Basisebene 50 bezogener Geräteschwerpunkt S zwischen den stiftförmigen Stützorganen 51, 52 und 53 liegt. In anderen Worten liegt dann eine Projektion S' des Geräteschwerpunkts S in Richtung senkrecht zur Basisebene 50 innerhalb eines durch die drei Auflageflächen 51a, 52a und 53a der drei Stützorgane 51, 52 und 53 definierten Dreiecks (Fig. 5). Durch diese Anordnung des Geräteschwerpunkts S wird ein stabiler Stand des Messgeräts erreicht und die Gefahr, dass das Gerät kippt, verringert.

Gemäss einer besonders zweckmässigen Ausbildung des erfindungsgemässen Messgeräts sind die stiftförmigen Stützorgane 51, 52 und 53 mit Sensoren 51b, 52b und 53b ausgestattet, welche mit der Steuerung ST zusammenarbeiten und die korrekte Positionierung des Messgeräts auf der Oberfläche O des Messobjekts MO zu überwachen ermöglichen (Fig. 6 und Fig. 7). Unter korrekter Positionierung ist zu verstehen, dass alle Stützorgane 51, 52 und 53 auf der Oberfläche des Messobjekts aufstehen. Die Sensoren 51b, 52b und 53b können beispielsweise als Druck-bzw. Kraftsensoren, insbesondere als Druckschalter ausgebildet sein. Die Steuerung ST kann so ausgelegt sein, dass sie z.B. über die Anzeigeanordnung 4 oder separate Signalleuchten dem Benutzer anzeigt, wenn das Messgerät korrekt positioniert und/oder nicht korrekt positioniert ist.

Durch die Ausbildung der Auflagevorrichtung als Dreipunktauflage wird eine sichere Positionierung des Messgeräts sowohl auf ebenen als auch auf gekrümmten Oberflächen von Messobjekten erreicht. Durch die erfindungsgemässe Anordnung von zwei stiftförmigen Stützorganen in der genannten Basislinie in der Beleuchtungs-Beobachtungs-Ebene wird gewährleistet, dass die Beleuchtungs- und Beobachtungsrichtungen relativ zum Messfleck MF bzw. zur Oberflächennormalen ON auf den Messfleck MF zumindest in der winkelempfindlichen Beleuchtungs-Beobachtungsebene 40 weitestgehend unabhängig von der Oberflächenkrümmung des Messobjekts bleiben. Auf diese Weise werden durch die Oberflächenkrümmung des Messobjekts bedingte Messwertverfälschungen weitestgehend vermieden.

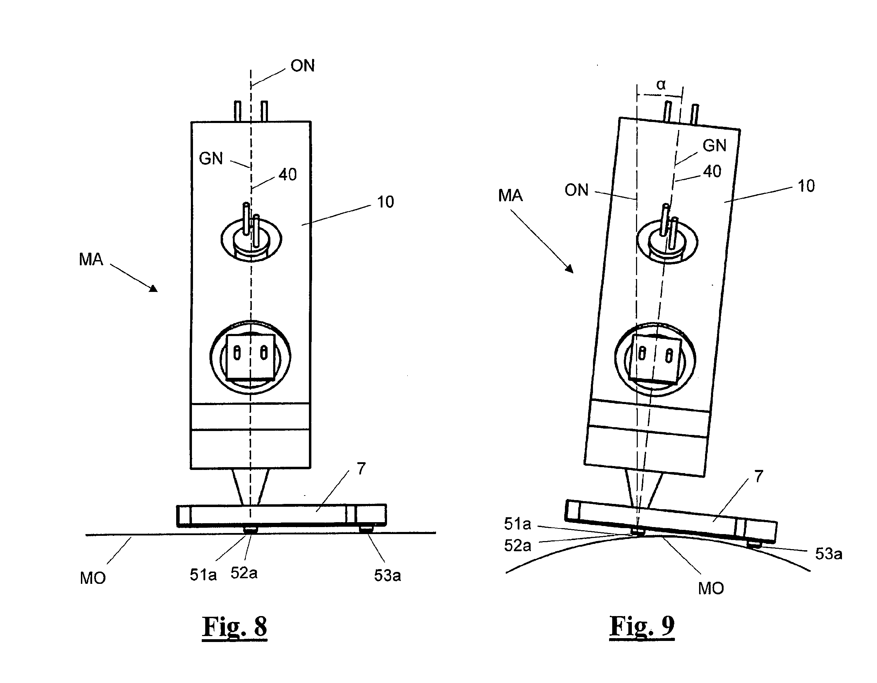

Die Fig. 8 zeigt ein Messgerät, das auf ein ebenes bzw. um eine zur Beleuchtungs-Beobachtungs-Ebene 40 senkrechte Achse zylindrisch gekrümmtes Messobjekt MO aufgesetzt ist. Vom Messgerät sind der Übersichtlichkeit halber nur die Messanordnung MA und die Bodenplatte 7 dargestellt. Man erkennt, dass die Oberflächennormale ON auf die Mitte des Messflecks mit der Beleuchtungs-Beobachtungs-Ebene 40 zusammenfällt.

Die Fig. 9 zeigt eine analoge Darstellung des Messgeräts, wobei aber das Messobjekt MO (zusätzlich) quer Beleuchtungs-Beobachtungs-Ebene 40 gekrümmt ist. In diesem Fall ist die Normale ON um einen Kippwinkel α aus der Beleuchtungs-Beobachtungs-Ebene 40 herausgekippt. Dieser relativ kleine Kippwinkel hat aber keinen substantiellen Einfluss auf das Messergebnis und ist auf jeden Fall weniger kritisch als eine Verkippung innerhalb der Beleuchtungs-Beobachtungs-Ebene 40.

Die Vorteile der erfindungsgemässen Dreipunktauflage kommen insbesondere bei unsymmetrisch oder unregelmässig gekrümmten Oberflächen des Messobjekts zum Tragen. Durch die erfindungsgemässe Anordnung von zwei stiftförmigen Stützorganen in der genannten Basislinie in der Beleuchtungs-Beobachtungs-Ebene wird gewährleistet, dass die Beleuchtungs- und Beobachtungsrichtungen relativ zum Messfleck bzw. zur Normalen auf den Messfleck in der Beleuchtungs-Beobachtungsebene weitestgehend unabhängig von der Oberflächenkrümmung des Messobjekts bleiben. Durch die erfindungsgemässe spezifische Anordnung der Stützorgane kommen eventuelle Winkelfehler alle in die unempfindliche Richtung quer zur Beleuchtungs-Beobachtungs-Ebene zu liegen, in der kritischen Beleuchtungs-Beobachtungs-Ebene entstehen praktisch keine Winkelfehler.

Die Figuren 10 und 11 illustrieren den praktischen Einsatz des erfindungsgemässen Farbmessgeräts an einem Messobjekt O mit zweidimensional gekrümmter Oberfläche O. Vom Messgerät ist der Übersichtlichkeit halber nur die Messanordnung MA zusammen mit der Basisplatte 7 und den darin angeordneten Stützorganen 51, 52 und 53 dargestellt. Die beiden strichpunktierten, zu einander orthogonalen Linien T1 und T2 deuten eine Tangentialebene an die Oberfläche O in der Mitte des Messflecks MF an, die strichpunktierte Linie GN ist die schon weiter vorne erwähnte, durch die Mitte der Messöffnung verlaufende Gerätenormale. Die beiden Winkel βund ω zwischen der Gerätenormalen GN und der Linie T1 einerseits und der Linie T2 anderseits verdeutlichen die räumliche Lage der Messanordnung MA relativ zur Oberfläche O des Messobjekts O. Der Winkel ω ist ein Mass für die Verkippung der Messanordnung MA in der (nicht dargestellten) Beleuchtungs-Beobachtungs-Ebene, der Winkel β ist ein Mass für die Verkippung der Messanordnung MA aus der Beleuchtungs-Beobachtungs-Ebene heraus, wobei 90.0° jeweils den Idealzustand ohne Verkippung bedeutet.

In Fig. 10 ist die Dreipunktauflage des Messgeräts beispielhaft so ausgebildet, dass sich die beiden Stützorgane 51 und 52 in einem relativ grossen Abstand zur (nicht dargestellten) Beleuchtungs-Beobachtungs-Ebene der Messanordnung MA befinden. Man erkennt hier eine deutliche Verkippung (Abweichung vom Idealzustand 90.0°), wobei aber die Verkippung in der Beleuchtungs-Beobachtungs-Ebene (Winkel ω = 89.17°) immer noch signifikant geringer ist als in Richtung quer dazu (Winkel β = 88.3°).

Beim Ausführungsbeispiel der Fig. 11 liegen die beiden Stützorgane 51 und 52 in der (nicht dargestellten) Beleuchtungs-Beobachtungs-Ebene der Messanordnung MA. Man erkennt hier, dass die Verkippung der Messanordnung in der Beleuchtungs-Beobachtungs-Ebene (Winkel ω = 89.99°) praktisch verschwindet und die Verkippung in Richtung quer dazu (Winkel β = 89.12°) ebenfalls relativ klein ist.

## Patentansprüche

1. Handfarbmessgerät (HFMG) mit einem eine Messanordnung (MA) und eine elektronische Steuerung (ST) aufnehmenden Gehäuse (G) mit einem Gehäuseboden (5) und einer Messöffnung (6), durch welche hindurch die Beleuchtung eines Messflecks (MF) auf einer Oberfläche (O) eines Messobjekts (MO) und das Aufpicken des vom Messfleck (MF) zurückgestrahlten Messlichts erfolgt, wobei die Messanordnung (MA) eine Beleuchtungsanordnung (11, 12, 13, 21, 22, 23) zur Beaufschlagung des Messflecks (MF) mit Beleuchtungslicht in mindestens einer Beleuchtungsrichtung (41, 42, 43) und eine Aufpickanordnung (14, 24) zur Erfassung des von dem Messfleck (MF) zurückgestrahlten Messlichts in mindestens einer Beobachtungsrichtung (44) umfasst, wobei die mindestens eine Beleuchtungsrichtung (41, 42, 43) und die mindestens eine Beobachtungsrichtung (44) in einer gemeinsamen Beleuchtungs-Beobachtungs-Ebene (40) liegen, wobei das Gehäuse (G) an seinem Gehäuseboden (5) eine Auflagevorrichtung (7, 51, 52, 53) zum Positionieren des Geräts auf der auszumessenden Oberfläche (O) aufweist, wobei die Auflagevorrichtung als Mehrpunktauflage mit Stützorganen (51, 52, 53) mit je einer Auflagefläche (51a, 52a, 53a) ausgebildet ist, und wobei die Auflageflächen (51a, 52a, 53a) der Stützorgane (51, 52, 53) im Wesentlichen in einer zur Beleuchtungs-Beobachtungs-Ebene (40) senkrechten Basisebene (50) liegen,
**dadurch gekennzeichnet, dass**
die Auflagevorrichtung (7, 51, 52, 53) als Dreipunktauflage mit drei im Wesentlichen stiftförmigen Stützorganen (51, 52, 53) ausgebildet ist;
die Auflageflächen (51a, 52a) eines ersten und eines zweiten Stützorgans (51, 52) in einer Basislinie (55) liegen, welche in der Beleuchtungs-Beobachtungs-Ebene (40) liegt,
die Auflagefläche (53a) des dritten Sfützozgans (53) in einem Abstand (b) zur Beleuchtungs-Beobachtungs-Ebene (40) angeordnet ist;
eine Projektion (S') des auf die Basisebene (50) bezogenen Schwerpunkts (S) des Handfarbmessgeräts (HFMG) in Richtung senkrecht auf die Basisebene (50) zwischen den Auflageflächen (51a, 52a, 53a) der Stützorgane (51, 52, 53) liegt; und
die Projektion (S') des Schwerpunkts (S) innerhalb eines durch die drei Auflageflächen (51a, 52a, 53a) der drei Stützorgane (51, 52, 53) definierten Dreiecks liegt, wodurch ein stabiler Stand des Handfarbmessgeräts (HMFG) erreicht ist.

2. Handfarbmessgerät (HFMG) nach Anspruch 1, wobei das erste und das zweite Stützorgan (51, 52) zu beiden Seiten der Messöffnung (6) und im Wesentlichen symmetrisch zu dieser angeordnet sind.

3. Handfarbmessgerät (HFMG) nach Anspruch 1 oder 2, wobei die Auflageflächen (51a, 52a, 53a) der Stützorgane (51, 52, 53) jeweils kleiner 20 mm² sind.

4. Handfarbmessgerät (HFMG) nach Anspruch 1 oder 2, wobei die Auflageflächen (51a, 52a, 53a) der Stützorgane (51, 52,53) jeweils kleiner 10 mm² sind.

5. Handfarbmessgerät (HFMG) nach Anspruch 1 oder 2, wobei die Anlageflächen (51a, 52a, 53a) der Stützorgane (51, 52, 53) jeweils kleiner 5 mm² sind.

6. Haudfarbmessgerät (HFMG) nach einem der vorangehenden Ansprüche, wobei die stiftförmigen Stützorgane (51, 52, 53) mit Sensoren, insbesondere Drucksensoren (51b, 52b, 53b) ausgestattet sind, welche mit der Steuerung (ST) derart zusammenarbeiten, dass überwacht und signalisiert wird, ob alle Stützorgane (51, 52, 53) korrekt auf der Oberfläche (O) des Messobjekts (MO) aufsitzen.

7. Handfarbmessgerät (HFMG) nach Anspruch 2, wobei das erste und zweite Stützorgane (51, 52) einen gegenseitigen Abstand von 10 mm bis 40 mm aufweisen.

8. Handfarbmessgerät (HFMG) nach irgendeinem der vorherigen Ansprüche, wobei der Abstand (b) des dritten Stützorgans (53) von der Beleuchtungs-Beobachtungs-Ebene (40) 15 mm bis 40 mm beträgt.

## Claims

1. A handheld color measuring apparatus (HFMG) including a housing (G) receiving a measurement assembly (MA) and an electronic control (ST) having a housing bottom (5) and a measurement opening (6), through which the illumination of a measurement spot (MF) on a surface (O) of a measured object (MO) and the pick-up of the measurement light radiated back from the measurement spot (MF) are performed, wherein the measurement assembly (MA) includes an illumination assembly (11, 12, 13, 21, 22, 23) for supplying the measurement spot (MF) with illumination light in at least one illumination direction (41, 42, 43) and a pick-up assembly (14, 24) for acquiring the measurement light radiated back from the measurement spot (MF) in at least one observation direction (44), wherein the at least one illumination direction (41, 42, 43) and the at least one observation direction (44) are in a common illumination-observation plane (40), wherein the housing (G) has a supporting device (7, 51, 52, 53) for positioning the apparatus on the surface (O) to be measured on its housing bottom (5), wherein the supporting device is formed as a multi-point support with supporting members (51, 52, 53) with each one supporting surface (51a, 52a, 53a), and wherein the supporting surfaces (51 a, 52a, 53a) of the supporting members (51, 52, 53) are substantially in a base plane (50) perpendicular to the illumination-observation plane (40),
**characterized in that**
the supporting device (7, 51, 52, 53) is formed as a three-point support with three substantially pin-shaped supporting members (51, 52, 53);
the supporting surfaces (51 a, 52a) of a first and a second supporting member (51, 52) are in a base line (55), which is in the illumination-observation plane (40),
the supporting surface (53a) of the third supporting member (53) is disposed in a distance (b) to the illumination-observation plane (40);
a projection (S') of the centroid (S) related to the base plane (50) of the handheld color measuring apparatus (HFMG) is in the direction perpendicular to the base plane (50) between the supporting surfaces (51 a, 52a, 53a) of the supporting members (51, 52, 53); and
the projection (S') of the centroid (S) is within a triangle defined by the three supporting surfaces (51 a, 52a, 53a) of the three supporting members (51, 52, 53), whereby a stabile stand of the handheld color measuring apparatus (HFMG) is achieved.

2. The handheld color measuring apparatus (HFMG) according to claim 1, wherein the first and the second supporting member (51, 52) are disposed to both sides of the measurement opening (6) and substantially symmetrically thereto.

3. The handheld color measuring apparatus (HFMG) according to claim 1 or 2, wherein the supporting surfaces (51 a, 52a, 53a) of the supporting members (51, 52, 53) are each smaller than 20 mm².

4. The handheld color measuring apparatus (HFMG) according to claim 1 or 2, wherein the supporting surfaces (51 a, 52a, 53a) of the supporting members (51, 52, 53) are each smaller than 10 mm².

5. The handheld color measuring apparatus (HFMG) according to claim 1 or 2, wherein the supporting surfaces (51a, 52a, 53a) of the supporting members (51, 52, 53) are each smaller than 5 mm².

6. The handheld color measuring apparatus (HFMG) according to any one of the preceding claims, wherein the pin-shaped supporting members (51, 52, 53) are equipped with sensors, in particular pressure sensors (51 b, 52b, 53b), which cooperate with the control (ST) such that it is monitored and signaled if all of the supporting members (51, 52, 53) are correctly seated on the surface (O) of the measured object (MO).

7. The handheld color measuring apparatus (HFMG) according to claim 2, wherein the first and the second supporting member (51, 52) have a mutual distance of 10 mm to 40 mm.

8. The handheld color measuring apparatus (HFMG) according to any one of the preceding claims, wherein the distance (b) of the third supporting member (53) from the illumination-observation plane (40) is 15 mm to 40 mm.

## Revendications

1. Appareil de mesure de couleur manuel (HFMG) avec un boîtier (G) intégrant un dispositif de mesure (MA) et une commande électronique (ST) avec un fond de boîtier (5) et une ouverture de mesure (6), à travers laquelle s'opère l'éclairage d'un spot de mesure (MF) sur la surface (O) d'un objet de mesure (MO) et la réception de la lumière de mesure réfléchie par le spot de mesure (MF), où le dispositif de mesure (MA) comprend un dispositif d'éclairage (11, 12, 13, 21, 22, 23) pour appliquer une lumière d'éclairage sur le spot de mesure (MF) dans au moins une direction d'éclairage et un dispositif de réception (14, 24) pour capturer la lumière de mesure réfléchie par le spot de mesure (MF) dans au moins une direction d'observation (44), où l'au moins une direction d'éclairage (41, 42, 43) et l'au moins une direction d'observation (44) se trouvent dans un plan d'éclairage-observation (40) commun, où le boîtier (G) comporte sur son fond de boîtier (5) un dispositif d'appui (7, 51, 52, 53) pour positionner l'appareil sur la surface (O) à mesurer, où le dispositif d'appui est configuré de manière à former un appui multi-point avec des organes de support (51, 52, 53) avec respectivement une surface d'appui (51a, 52a, 53a), et où les surfaces d'appui (51a, 52a, 53a) des organes de support (51, 52, 53) se trouvent sensiblement dans un plan de base (50) perpendiculaire au plan d'éclairage-observation (40),
**caractérisé en ce que**
le dispositif d'appui (7, 51, 52, 53) est configuré de manière à former un appui à trois points avec trois organes de support (51, 52, 53) sensiblement en forme de pointes ;
les surfaces d'appui (51a, 52a) d'un premier et d'un deuxième organe de support (51, 52) se trouvent sur une ligne de base (55) se trouvant dans le plan d'éclairage-observation (51, 52, 53) ;
la surface d'appui (53a) du troisième organe de support (53) est disposé à une distance (b) du plan d'éclairage-observation (40) ;
une projection (S') du barycentre (S) relatif au plan de base (50) de l'appareil de mesure de couleur manuel (HFMG) perpendiculairement au plan de base (50) se trouve entre les surfaces d'appui (51a, 52a, 53a) des organes de support (51, 52, 53) ; et
la projection (S') du barycentre (S) se trouve à l'intérieur d'un triangle défini par les trois surfaces d'appui (51a, 52a, 53a) des trois organes de support (51, 52, 53) permettant ainsi d'obtenir un positionnement stable de l'appareil de mesure de couleur manuel (HMFG).

2. Appareil de mesure de couleur manuel (HFMG) selon la revendication 1, où le premier et le deuxième organe de support (51, 52) sont disposés des deux côtés de l'ouverture de mesure (6) et de manière sensiblement symétrique par rapport à celle-ci.

3. Appareil de mesure de couleur manuel (HFMG) selon l'une des revendications 1 ou 2, où les surfaces d'appui (51a, 52a, 53a) des organes de support (51, 52, 53) sont respectivement plus petites que 20 mm².

4. Appareil de mesure de couleur manuel (HFMG) selon l'une des revendications 1 ou 2, où les surfaces d'appui (51a, 52a, 53a) des organes de support (51, 52, 53) sont respectivement plus petites que 10 mm².

5. Appareil de mesure de couleur manuel (HFMG) selon l'une des revendications 1 ou 2, où les surfaces d'appui (51a, 52a, 53a) des organes de support (51, 52, 53) sont respectivement plus petites que 5 mm².

6. Appareil de mesure de couleur manuel (HFMG) selon l'une des revendications précédentes, où les organes de support en forme de pointes (51, 52, 53) sont équipés de capteurs, notamment de capteur de pression (51b, 52b, 53b) coopérant avec la commande (ST) de manière à surveiller et signaler si tous les organes de support (51, 52, 53) reposent correctement sur la surface (O) de l'objet de mesure (MO).

7. Appareil de mesure de couleur manuel (HFMG) selon la revendication 2, où le premier et le deuxième organe de support (51, 52) comportent un écart réciproque de 10 mm à 40 mm.

8. Appareil de mesure de couleur manuel (HFMG) selon l'une quelconque des revendications précédentes, où la distance (b) entre le troisième organe de support (53) et le plan d'éclairage-observation (40) mesure de 15 mm à 40 mm.
